Europäisches Patentamt

European Patent Office

Office européen des brevets

(11) Veröffentlichungsnummer: **0 272 448 B1**

# EUROPÄISCHE PATENTSCHRIFT

(45) Veröffentlichungstag der Patentschrift: **17.04.91**

(51) Int. Cl.5: **C01C 1/04, B01J 8/04**

(21) Anmeldenummer: **87116872.0**

(22) Anmeldetag: **16.11.87**

(54) **Vorrichtung als NH3-Reaktor.**

(30) Priorität: **20.12.86 DE 3643726**

(43) Veröffentlichungstag der Anmeldung:
**29.06.88 Patentblatt 88/26**

(45) Bekanntmachung des Hinweises auf die
Patenterteilung:
**17.04.91 Patentblatt 91/16**

(84) Benannte Vertragsstaaten:
**AT BE DE ES FR GB IT NL**

(56) Entgegenhaltungen:
**DE-C- 2 710 247**
**DE-C- 3 343 114**

(73) Patentinhaber: **Uhde GmbH**
**Friedrich-Uhde-Strasse 15 Postfach 262**
**W-4600 Dortmund 1(DE)**

(72) Erfinder: **Nast, Fred, Dipl.-Ing.**
**Habichtstrasse 27**
**W-4750 Unna-Königsborn(DE)**
Erfinder: **Herbort, Hans-Joachim, Dipl.Ing.**
**Unnaer Strasse 65b**
**W-5758 Fröndenberg(DE)**
Erfinder: **Graeve, Heinz, Dipl.Ing.**
**Bittermarkstrasse 33a**
**W-4600 Dortmund 50(DE)**

(74) Vertreter: **Patentanwälte Meinke und Dabring-**
**haus Dipl.-Ing. J. Meinke Dipl.-Ing. W. Dab-**
**ringhaus**
**Westenhellweg 67**
**W-4600 Dortmund 1(DE)**

## Beschreibung

Die Erfindung richtet sich auf eine Vorrichtung als NH3-Reaktor mit insbesondere wenigstens zwei in einem Druckbehälter axial hintereinander, konzentrisch angeordneten Wärmetauschern und diese umgebende Katalysatorbetten.

Es sind eine Reihe von Gestaltungsmöglichkeiten von Reaktoren für exotherme, katalytische Gasreaktionen bekannt, wie sie beispielsweise für die Ammoniak- oder Methanolsynthese herangezogen werden.

Derartige Vorrichtungen weisen in der Regel einen Druckbehälter auf, wobei dafür Sorge getragen werden muß, daß die Behälterwände möglichst nicht zu hohen Temperaturen ausgesetzt werden; zweckmäßig sollten sie über die gesamte Ausdehnung möglichst eine gleichmäßige, vergleichsweise niedrige Temperatur aufweisen.

So zeigt die Patentschrift 33 43 114 der Anmelderin ein Reaktorgefäß mit zwei Katalysatorbetten, wobei dort das Prozeßgas zunächst von unten in das Reaktionsgefäß eingebracht wird, als Mantelgas beide im inneren befindlichen Katalysatorbetten umströmt und von oben dann durch Wärmetauscher geführt, schließlich dem ersten Katalysatorbett zugeführt wird.

Was die Reaktorwandkühlung angeht, so zeigt die DE-OS 31 46 778 eine ganz ähnliche Lösung. Hier wird ebenfalls von unten das Prozeßgas eingeführt, an der Behälterwand entlang nach oben und dann in den ersten Wärmetauscher über ein inneres konzentrisches Fallrohr. Auch diese Konstruktion zeigt in einem gemeinsamen Gehäuse zwei Katalysatorbetten, ebenso wie die Patentschrift 27 10 247, die auch die Möglichkeit zeigt, das Synthesegas zunächst von oben in den Behälter einzuleiten und dann nach unten zu führen. Dieser Vorschlag zeigt wiederum zwei Katalysatorbetten, wobei das kalte Synthesegas nach Kühlung der Behälterwand zunächst einem Bodenwärmetauscher zugeführt wird, um dann dem ersten Katalysatorbett zugeführt zu werden.

Aufgabe der Erfindung ist die Schaffung einer Lösung, mit der mit konstruktiv vergleichsweise einfachen Mitteln bei Aufrechterhaltung einer optimalen Behälterwandkühlung das Kreislaufgas bzw. Prozeßgas optimal vorgewärmt und innerhalb des Behälters geführt werden kann, wobei der Behälter insbesondere mehr als zwei Katalysatorbetten aufweisen kann.

Diese Aufgabe wird gemäß der Erfindung dadurch gelöst, daß die Vorkammer des zweiten Wärmetauschers mit einer radial seitlichen und/oder von unten eingeführten Zuführleitung für wenigstens einen Teil des durch einen im oberen Bereich des Druckbehälters zugeführten, den Mantel bestreichenden Kreislaufgases ausgerüstet ist.

Wenn hier und im folgenden die Bezeichnungen "erster Wärmetauscher" und "zweiter Wärmetauscher" bzw. "erstes, zweites, drittes Katalysatorbett" benutzt wird, so sind die Bezeichnungen dabei derart getroffen, daß im stehenden Druckbehälter der obere Wärmetauscher als "erster Wärmetauscher" und das diesen Wärmetauscher umgebende Katalysatorbett als "erstes Katalysatorbett" bezeichnet ist, der darunterliegende Wärmetauscher als "zweiter Wärmetauscher" und sofort.

Mit der Erfindung wird eine vergleichsweise einfache konstruktive Lösung in der Führung des kühlenden Mantelgases erreicht. Dadurch, daß wenigstens ein Teil des Mantelgases von oben eingeführt wird und wenigstens einen Teil der Behälterwand im Nachunterströmen kühlt, kann es dem zweiten Wärmetauscher von unten oder seitlich in dessen Vorkammer zugeführt werden, was insbesondere die Konstruktion dieses zweiten Wärmetauschers stark vereinfacht.

In Ausgestaltung sieht die Erfindung vor, daß drei Katalysatorbetten axial hintereinander im Reaktor vorgesehen sind und daß das Kreislaufgas als Kühlgas den gesamten Mantel beaufschlagt und von einem Sammelraum unterhalb des dritten Katalysatorbettes in einem konzentrischen Rohr der Vorkammer des zweiten Wärmetauschers zugeführt wird.

Bei dieser Konstruktion besteht die Möglichkeit, das von unten durch das dritte Katalysatorbett geführte konzentrische Rohr bereits von Kreislaufgas zu beheizen, wenn dies gewünscht werden sollte.

Die Erfindung sieht auch vor, daß dem dem ersten Katalysatorbett zugeordneten ersten Wärmetauscher ein inneres, konzentrisches Rohr zur Zuführung eines die Temperatur regelnden Regelgases zugeordnet ist, welches in der Vorkammer des ersten Wärmetauschers mündet, wobei die Erfindung in weiterer Ausgestaltung vorsieht, daß die Vorkammer unterhalb des Wärmetauschers als Mischkammer für das Kreislaufgas und das Regelgas ausgebildet ist.

In weiterer Ausgestaltung ist nach der Erfindung vorgesehen, daß sie mit einem oberen und einem unteren Zuführstutzen für Teilströme des Kreislaufgases als Mantelgas ausgerüstet ist, wobei eine radiale Zuführung des Teilstrommantelgases zur Vorkammer des zweiten Wärmetauschers vorgesehen ist. Diese Ausgestaltung macht es möglich, Teilströme des Kreislauf- bzw. Prozeßgases sowohl von unten als auch von oben in den Druckbehälter einzuleiten und so mit unterschiedlichen Strömen eine Mantelkühlung vorzunehmen, was insbesondere den Vorteil hat, daß damit berücksichtigt werden kann, daß die unterschiedlichen Stufen in den Katalysatorbetten je nach Prozeßführung auch nach außen unterschiedliche Wärmemengen abgeben können, die dann von unterschiedlichen Mantelgasströmen bewältigt werden können.

Die Erfindung ist nachstehend anhand der Zeichnung beispielsweise näher erläutert. Diese zeigt in

Fig. 1    den Schnitt durch eine Vorrichtung nach der Erfindung in vereinfachter Darstellung sowie in

Fig. 2    ein abgewandeltes Ausführungsbeispiel in gleicher Darstellung wie dasjenige gemäß Fig. 1.

Die allgemein mit 1 bezeichnete Vorrichtung wird im wesentlichen von einem Druckbehälter 2 gebildet, in dem im dargestellten Beispiel drei Katalysatorbetten konzentrisch zur Mittelachse 3 angeordnet sind. Das obere und erste Katalysatorbett ist mit 4, das mittlere und zweite mit 5 und das untere und letzte mit 6 bezeichnet.

Im Inneren des ersten Katalysatorbettes 4 ist ein erster Wärmetauscher 7, im Inneren des zweiten Katalysatorbettes 5 ein zweiter Wärmetauscher 8 angeordnet, die funktionsmäßig hintereinander geschaltet sind. Die Katalysatoren einschließlich der Wärmetauscher sind von einer Hüllwand 9 umgeben, die so bemaßt ist, daß sich zwischen der Innenfläche der Behälterwand 2 und der Hüllwand 9 ein durchgehender Ringraum 10 bildet.

Neben einem Zuführstutzen 11 für eine Starteinrichtung ist ein Kreislaufgaszuführstutzen 12 im oberen Bereich des Druckbehälters 2 vorgesehen. Dort ist im dargestellten Beispiel auch der Zuführstutzen 13 eines Regelgases, welches über eine genau im Zentrum der Vorrichtung 1 liegende Fallleitung 14 durch den ersten Wärmetauscher 7 hindurch zu dessen am unteren Ende angeordneten Vorkammer 15 geführt ist.

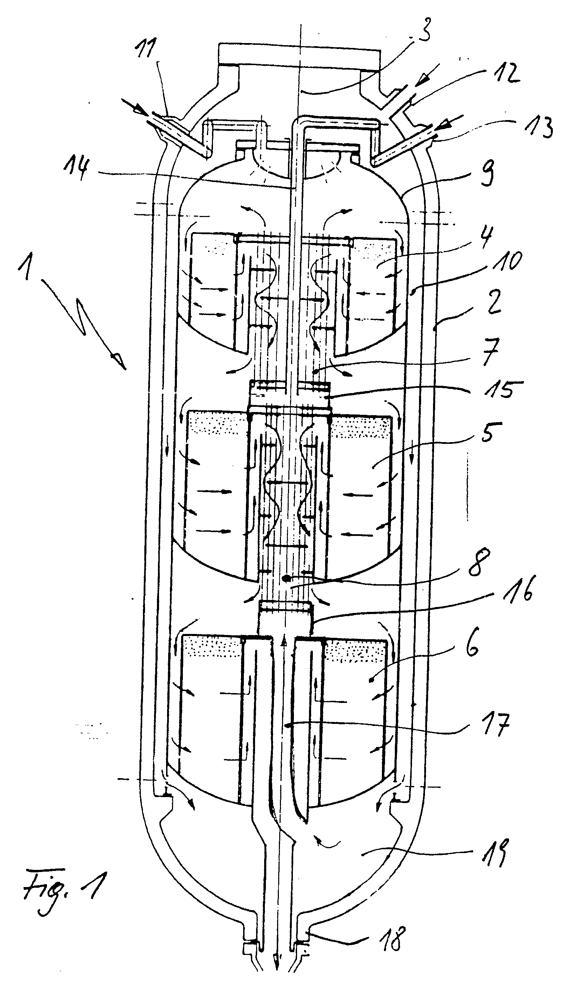

Auch der zweite Wärmetauscher 8 weist eine Vorkammer 16 auf, die im Beispiel nach Fig. 1 von einer von unten kommenden Zuführung 17 beaufschlagt ist. Der Auslaßstutzen der Vorrichtung ist schließlich mit 18 bezeichnet.

Die Wirkungsweise ist dabei die folgende:

Das Prozeß- bzw. Kreislaufgas wird über den Stutzen 12 der Vorrichtung 1 zugeführt und durchströmt den Ringraum 10 zwischen Behälterwand 2 und der Einfassung 9 der Katalysatorbetten mit Wärmetauschern. In einem unter dem letzten Katalysatorbett 6 angeordneten unteren Sammelraum 19 sammelt sich das kühlende Mantelgas und strömt durch die Zuführung 17 zur Vorkammer 16 des zweiten Wärmetauschers 8.

An dieser Stelle sei bemerkt, daß die Bezifferung der Wärmetauscher entsprechend der ihnen zugeordneten Katalysatorbetten vorgenommen wurde.

Nach Verlassen des Wärmetauschers 8 strömt das Kreislaufgas in die Vorkammer 15 des ersten Wärmetauschers, in dem auch die Falleitung 14 für ein Regelgas mündet. Die Vorkammer 15 ist als Mischkammer ausgebildet.

Nach Durchströmen des zweiten Wärmetauschers 8 wird das Kreislaufgas durch das erste Katalysatorbett hindurchgeleitet und durchströmt dann im Gegenstrom den ersten Wärmetauscher 7 unter Abgabe der Überschußwärme. Danach wird das zweite Katalysatorbett 5 durchströmt und der zweite Wärmetauscher wiederum im Gegenstrom bis schließlich auch das dritte Katalysatorbett durchströmt ist und im Gegenstrom gegen die Zuführung 17 das Kreislaufgas über den Stutzen 18 die Vorrichtung 1 verläßt.

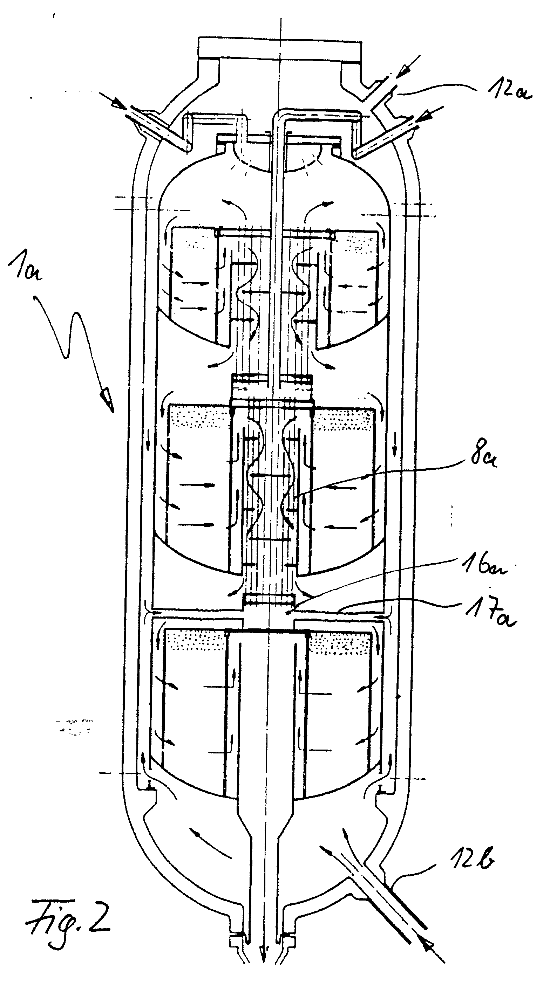

Bei der Fig. 2 ist ein abgewandeltes Ausführungsbeispiel dargestellt, wobei im wesentlichen nur die Unterschiede nachfolgend näher beschrieben sind. So weist die mit 1a bezeichnete Vorrichtung gemäß Fig. 2 einen unteren zweiten Zuführstutzen 12b für einen Teilstrom des Kreislaufgases als Mantelgas auf (der obere Zuführstutzen für den Rest des Kreislaufgases ist mit 12a bezeichnet). Hier wird die Vorkammer 16a des zweiten Wärmetauschers 8a von im wesentlichen radial verlaufenden Zuführungen 17a beaufschlagt, in die sowohl das von oben herabströmende wie von unten aufsteigende Mantelgas einströmen. Die weitere Prozeßführung entspricht dann derjenigen gemäß Fig. 1.

## Ansprüche

1.  NH₃-Reaktor mit wenigstens zwei in einem Druckbehälter axial hintereinander, konzentrisch angeordneten Wärmetauschern und diese umgebende Katalysatorbetten,
    dadurch gekennzeichnet,
    daß die Vorkammer (16) des zweiten Wärmetauschers (8) mit einer radial seitlichen und/oder von unten eingeführten Zuführleitung (17) für wenigstens einen Teil des durch einen im oberen Bereich des Druckbehälters (2) zugeführten, den Mantel bestreichenden Kreislaufgases ausgerüstet ist.

2.  Vorrichtung nach Anspruch 1,
    dadurch gekennzeichnet,
    daß drei Katalysatorbetten (4-6) axial hintereinander im Reaktor (1), ein Ringraum (10) für das Kreislaufgas als Kühlgas und ein Sammelraum (19) unterhalb des dritten Katalysatorbettes (6) sowie ein konzentrisches Rohr (17) von dort zur Vorkammer (16) des zweiten Wärmetauschers (8) vorgesehen sind.

3.  Vorrichtung nach Anspruch 1 oder 2,

dadurch gekennzeichnet,
daß dem dem ersten Katalysatorbett (4) zugeordneten ersten Wärmetauscher (7) ein inneres, konzentrisches Rohr (14) zur Zuführung eines die Temperatur regelnden Regelgases zugeordnet ist, welches in der Vorkammer (15) des ersten Wärmetauschers (7) mündet.

4.  Vorrichtung nach Anspruch 3,
    dadurch gekennzeichnet,
    daß die Vorkammer (15) unterhalb des ersten Wärmetauschers (7) als Mischkammer für das Kreislaufgas und das Regelgas ausgebildet ist.

5.  Vorrichtung nach einem der vorangehenden Ansprüche,
    dadurch gekennzeichnet,
    daß der Reaktor (1) mit einem oberen (12a) und einem unteren (12b) Zuführstutzen für Teilströme des Kreislaufgases als Mantelgase ausgerüstet ist, wobei eine radiale Zuführung (17a) der Teilstrommantelgase zur Vorkammer (16a) des zweiten Wärmetauschers (8a) vorgesehen ist.

## Claims

1.  NH₃ reactor with at least two heat exchangers arranged concentrically and axially consecutively in a pressure vessel and catalyst beds surrounding same, characterised in that the antechamber (16) of the second heat exchanger (8) is equipped with a supply line (17) which is radially lateral and/or introduced from below for at least part of the circuit gas, which is supplied through the upper region of the pressure vessel (2) and which passes over the casing.

2.  Apparatus according to claim 1, characterized in that three catalyst beds (4-6) are provided axially consecutively in the reactor (1), together with an annular chamber (10) for the circuit gas as cooling gas and a collecting chamber (19) below the third catalyst bed (6) and a concentric pipe (17) from there to the antechamber (16) of the second heat exchanger (8).

3.  Apparatus according to claim 1 or 2, characterized in that an inner, concentric pipe (14) for supplying a regulating gas for controlling the temperature is associated with the first heat exchanger (7) associated with the first catalyst bed (4), and opens into the antechamber (15) of the first heat exchanger (7).

4.  Apparatus according to claim 3, characterized in that the antechamber (15) is formed below the first heat exchanger (7) as a mixing chamber for the circuit gas and the regulating gas.

5.  Apparatus according to one of the preceding claims, characterized in that the reactor (1) is equipped with an upper (12a) and a lower (12b) supply nozzle for partial streams of the circuit gas as casing gases, a radial supply (17a) of the partial stream casing gases being provided to the antechamber (16a) of the second heat exchanger (8a).

## Revendications

1.  Réacteur à NH3 avec au moins deux échangeurs de chaleur disposés l'un derrière l'autre, concentriquement dans un récipient à pression et des lits de catalyseurs les entourant, caractérisé en ce que la préchambre (16) du second échangeur de chaleur 8 est équipée d'une canalisation d'admission (17) radiale-latérale et/ou introduite par en-dessous pour au moins une partie du gaz de recyclage amené dans la région supérieure du récipient à pression (2), léchant l'enveloppe.

2.  Dispositif selon la revendication 1, caractérisé en ce que sont prévus trois lits de catalyseurs (4-6) l'un derrière l'autre dans le sens axial dans le réacteur 1, un espace annulaire (10) pour le gaz de recyclage servant de gaz de refroissement et un espace de collecte (19) au-dessous du troisième lit de catalyseur (6) ainsi qu'un tuyau concentrique (17) allant de là à la préchambre (16) du second échangeur de chaleur (8).

3.  Dispositif selon les revendications 1 ou 2, caractérisé en ce qu'on a adjoint au premier échangeur de chaleur (7) affecté au premier lit de catalyseur (14) un tuyau interne, concentrique (14) pour amené un gaz régulateur réglant la température, qui débouche dans la préchambre (15) du premier échangeur de chaleur (7).

4.  Dispositif selon la revendication 3, caractérisé en ce que la réchambre (15) sous le premier échangeur de chaleur (7) revêt la forme d'une chambre de mélange pour le gaz de recyclage et le gaz régulateur.

5.  Dispositif selon l'une des revendications précédentes, caractérisé en ce que le réacteur (1) est équipé d'une tubulure d'amenée supérieure (12a) et d'une tubulure d'amenée inférieure (12b) pour des courants partiels du gaz de recyclage en tant que gaz d'enveloppe de courants partiels à la préchambre (16a) du second échangeur de chaleur (8a) étant prévue.

Fig. 1

*Fig.2*